# EUROPÄISCHE PATENTANMELDUNG

(11) **EP 3 385 020 A1**
(43) Veröffentlichungstag der Anmeldung: **10.10.2018**
(21) Anmeldenummer: 17164597.1
(22) Anmeldetag: 03.04.2017
(51) Int. Cl.: B23K 9/013, B23K 9/29, B23K 9/12, B23H 9/06, B25H 7/04, B44B 7/00

(54) **VERFAHREN UND VORRICHTUNG ZUR MARKIERUNG EINER WERKSTÜCKOBERFLÄCHE EINES METALLISCHEN WERKSTÜCKES UNTER VERWENDUNG EINER SCHWEISSDRAHTELEKTRODE**

(71) Anmelder: Fronius International GmbH, 4643 Pettenbach (AT)
(72) Erfinder: Schörghuber, Manfred, 4600 Wels (AT); Waldhör, Andreas, 4643 Pettenbach (AT); Mayer, Manuel, 4650 Edt bei Lambach (AT)
(74) Vertreter: Isarpatent

(57) **Zusammenfassung**

Diese Anmeldung betrifft ein Verfahren und eine Vorrichtung zum Markieren einer Werkstückoberfläche (2A) eines metallischen Werkstückes (2). Die Vorrichtung aufweist ein Schweißbrenner (3) mit einer abschmelzbaren Schweißdrahtelektrode (4), der entlang der zu markierenden Werkstückoberfläche (2A) geführt und dabei ein Drahtende (4A) der abschmelzbaren Schweißdrahtelektrode (4) zu der zu markierenden Werkstückoberfläche (2A) hin- und wegbewegt wird, wobei eine an der Schweißdrahtelektrode (4) anliegende elektrische Spannung (U) und/oder ein durch die Schweißdrahtelektrode (4) fließender elektrischer Strom (I) elektrische Funken, die einen Materialabtrag an der Werkstückoberfläche (2A) des metallischen Werkstückes (2) zur Markierung der Werkstückoberfläche (2A) hervorrufen, erzeugen.

## Beschreibung

Die Erfindung betrifft ein Verfahren und eine Vorrichtung zur Markierung einer Werkstückoberfläche eines metallischen Werkstückes, insbesondere eines metallischen Werkstückes, das anschließend geschweißt wird.

Es gibt unterschiedliche herkömmliche Verfahren zur Markierung von Gegenständen. Die Markierung einer Bauteiloberfläche kann durch Materialabtrag, Materialauftrag oder Materialveränderung erfolgen. Beispielsweise kann durch elektrische, chemische oder laserbasierte Markierungsverfahren Material an einer Bauteiloberfläche abgetragen werden, um das entsprechende Bauteil zu kennzeichnen.

Auch bei Werkstücken bzw. Bauteilen, an denen ein Schweißprozess durchzuführen ist, ist deren Markierung in vielen Anwendungsfällen nützlich. Herkömmliche Schweißsysteme oder Schweißverfahren bieten allerdings nicht die Möglichkeit, die Werkstücke vor oder nach Durchführung des Schweißvorganges ohne zusätzlichen technischen Aufwand zu markieren.

Es ist daher eine Aufgabe der vorliegenden Erfindung, ein Verfahren und eine Vorrichtung zu schaffen, die es erlauben, die Werkstückoberfläche eines metallischen Werkstückes, bei dem eine Schweißung vorgenommen wird, ohne zusätzlichen Aufwand zu markieren.

Diese Aufgabe wird erfindungsgemäß durch ein Verfahren zum Markieren einer Werkstückoberfläche eines metallischen Werkstückes mit den in Patentanspruch 1 angegebenen Merkmalen gelöst.

Die Erfindung schafft demnach ein Verfahren zum Markieren einer Werkstückoberfläche eines metallischen Werkstückes, bei dem ein Schweißbrenner mit einer Schweißdrahtelektrode entlang der zu markierenden Werkstückoberfläche geführt wird und dabei ein Drahtende der Schweißdrahtelektrode zu der zu markierenden Werkstückoberfläche hin- und wegbewegt wird, wobei eine an der Schweißdrahtelektrode anliegende elektrische Spannung und/oder ein durch die Schweißdrahtelektrode fließender elektrischer Strom elektrische Funken, die einen Materialabtrag und/oder eine Materialveränderung an der Werkstückoberfläche des metallischen Werkstückes zur Markierung der Werkstückoberfläche hervorrufen, erzeugen.

Bei einer möglichen Ausführungsform des erfindungsgemäßen Verfahrens besteht die Schweißdrahtelektrode aus einem während eines Schweißprozesses abschmelzbaren Zusatzmaterialwerkstoff.

Bei einer weiteren möglichen Ausführungsform des erfindungsgemäßen Verfahrens wird das Drahtende der Schweißdrahtelektrode wiederkehrend zu der Werkstückoberfläche hinbewegt, bis ein elektrischer Kurzschluss mit dem metallischen Werkstück entsteht und anschließend von der Werkstückoberfläche wegbewegt, wobei beim Auftrennen des elektrischen Kurzschlusses jeweils ein elektrischer Funke erzeugt wird, der punktuell einen Materialabtrag und/oder eine Materialveränderung an der Werkstückoberfläche des metallischen Werkstückes zur Generierung eines Markierungspunktes hervorruft.

Bei einer weiteren möglichen Ausführungsform des erfindungsgemäßen Verfahrens bilden die an der Werkstückoberfläche des metallischen Werkstückes generierten Markierungspunkte eine in der Werkstückoberfläche sichtbare Markierungsbahn.

Bei einer weiteren möglichen Ausführungsform des erfindungsgemäßen Verfahrens wird die an der Schweißdrahtelektrode anliegende elektrische Spannung und/oder der durch die Schweißdrahtelektrode fließende elektrische Strom durch eine mit der Schweißdrahtelektrode verbundene Schweißstromquelle eines Schweißsystems zur Einstellung des an der Werkstückoberfläche des metallischen Werkstückes hervorgerufenen Materialabtrages und/oder einer Materialveränderung geregelt.

Bei einer weiteren möglichen Ausführungsform des erfindungsgemäßen Verfahrens wird für eine vorbestimmte ersten Zeitdauer nach dem Kurzschlusseintritt ein vorbestimmtes erstes Stromniveau nicht überschritten, um ein Festkleben der Drahtelektrode zu verhindern. Vorzugsweise ist die erste Zeitdauer größer 400us und das erste Stromniveau kleiner 30A.

Bei einer weiteren möglichen Ausführungsform des erfindungsgemäßen Verfahrens wird vor dem Kurzschlussaufbruch, der durch das Abheben der Schweißdrahtelektrode bewirkt wird, der Strom auf mindestens ein vorbestimmtes zweites Stromniveau eingestellt, um die Zündung eines Funken beim Kurzschlussaufbruch sicher zu stellen. Dabei kann der Zeitpunkt des Kurzschlussaufbruchs aufgrund des Bewegungsprofils der Schweißdrahtelektrode vorausbestimmt werden. Vorzugsweise ist dieses zweite Stromniveau größer 10A.

Bei einer weiteren möglichen Ausführungsform des erfindungsgemäßen Verfahrens wird nach dem Kurzschlussaufbruch der Funken entsprechend eines vorbestimmten Strom- und Zeitprofils aufrecht erhalten, um die Ausprägung des Markierungspunkts zu beeinflussen. Das Strom- und Zeitprofils kann durch die Fläche im Zeitdiagramm des Stromverlaufs näher bestimmt werden. Vorzugsweise ist die vorbestimmte Strom-Zeit-Fläche zwischen 100*µ*As und 20mAs.

Bei einer alternativen Ausführungsform des erfindungsgemäßen Verfahrens wird nach dem Kurzschlussaufbruch eine vorbestimmte Spannung zwischen Schweißdrahtelektrode und Werkstück eingestellt, die zur Ausbildung eines Funkens ausreichend ist. Im Zug der Wegbewegung der Schweißdrahtelektrode von der Werkstückoberfläche vergrößert sich die Luftstrecke und der Funken kann verlöschen. Die Ausprägung des Markierungspunkts kann hier über die Spannungshöhe und die Bewegungsgeschwindigkeit bzw. das Bewegungsprofil der Schweißdrahtelektrode eingestellt werden. Vorzugsweise beträgt die Spannung zwischen 10V und 20V.

Bei einer weiteren möglichen Ausführungsform des erfindungsgemäßen Verfahrens wird ein Bewegungsprofil und/oder eine Bewegungsfrequenz des sich zu der zu markierenden Werkstückoberfläche hin- und wegbeweglichen Drahtendes der Schweißdrahtelektrode eingestellt.

Bei einer weiteren möglichen Ausführungsform des erfindungsgemäßen Verfahrens wird eine Bewegungsgeschwindigkeit und/oder Bewegungsbahn des Schweißbrenners, mit welcher das Drahtende der Schweißdrahtelektrode entlang der zu markierenden Werkstückoberfläche des metallischen Werkstückes geführt wird, eingestellt.

Bei einer weiteren möglichen Ausführungsform des erfindungsgemäßen Verfahrens werden die an der Werkstückoberfläche des metallischen Werkstückes generierten Markierungspunkte und oder Markierungsbahnen zur Darstellung von Daten, insbesondere zur Beschriftung des Werkstückes und/oder zur Kennzeichnung des Werkstückes mit einem Code, insbesondere einem QR-Code, verwendet.

Bei einer weiteren möglichen Ausführungsform des erfindungsgemäßen Verfahrens wird das sich hin- und wegbewegende Drahtende der Schweißdrahtelektrode während des Markierens entlang eines programmierten Sollverlaufs einer in einem nachfolgenden Schweißvorgang herzustellenden Schweißnaht geführt.

Bei einer weiteren möglichen Ausführungsform des erfindungsgemäßen Verfahrens wird eine Abweichung zwischen dem Istverlauf einer Markierungsbahn und dem Sollverlauf der Schweißnaht zur Qualitätskontrolle und/oder Nachjustierung einer Schweißbrennerführung gemessen.

Bei einer weiteren möglichen Ausführungsform des erfindungsgemäßen Verfahrens wird eine Kontraststärke einer an der Werkstückoberfläche erzeugten Markierungsbahn durch Veränderung von Markierungsparametern eingestellt, welche die durch eine Schweißstromquelle geregelte Spannungs- und/oder Stromstärke, das Bewegungsprofil und/oder die Bewegungsfrequenz des Drahtendes der Schweißdrahtelektrode und/oder die Bewegungsgeschwindigkeit des Schweißbrenners, mit welcher das Drahtende der Schweißdrahtelektrode entlang der Werkstückoberfläche geführt wird, aufweisen.

Bei einer weiteren möglichen Ausführungsform des erfindungsgemäßen Verfahrens werden die beim Markieren der Werkstückoberfläche verwendeten Markierungsparameter als Datensatz in einem Datenspeicher des Schweißsystems abgespeichert und für einen nachfolgenden Markierungsvorgang wieder aus dem Datenspeicher des Schweißsystems ausgelesen.

Bei einer weiteren möglichen Ausführungsform des erfindungsgemäßen Verfahrens wird für verschiedene Kontraststärken einer an der Werkstückoberfläche gebildeten Markierungsbahn und/oder für unterschiedliche Materialien des metallischen Werkstückes und/oder für unterschiedliche Schweißdrahtelektroden ein zugehöriger Datensatz von geeigneten Markierungsparametern aus dem Datenspeicher des Schweißsystems zum Markieren der Werkstückoberfläche des metallischen Werkstückes ausgelesen.

Bei einer weiteren möglichen Ausführungsform des erfindungsgemäßen Verfahrens wird während des Markierens der Werkstückoberfläche des metallischen Werkstückes die Werkstückoberfläche durch zugeführtes Schutzgas vor Oxidation geschützt.

Bei einer weiteren möglichen Ausführungsform des erfindungsgemäßen Verfahrens wird der Schweißbrenner während des Markierens der Werkstückoberfläche durch einen Roboterarm entsprechend einem programmierten Sollverlauf einer in einem nachfolgenden Schweißvorgang herzustellenden Schweißnaht automatisch geführt.

Bei einer weiteren alternativen Ausführungsform des erfindungsgemäßen Verfahrens wird der Schweißbrenner während des Markierens der Werkstückoberfläche, insbesondere zur Beschriftung der Werkstückoberfläche, handgeführt.

Die Erfindung schafft ferner gemäß einem weiteren Aspekt eine Markierungsvorrichtung zur Markierung einer Werkstückoberfläche eines metallischen Werkstückes mit den in Patentanspruch 16 angegebenen Merkmalen.

Die Erfindung schafft demnach eine Markierungsvorrichtung zur Markierung einer Werkstückoberfläche eines metallischen Werkstückes,
wobei ein Drahtende einer abschmelzbaren Schweißdrahtelektrode eines Schweißsystems entlang der zu markierenden Werkstückoberfläche des metallischen Werkstückes führbar ist und dabei die Markierungsvorrichtung geeignet ist, das Drahtende der Schweißdrahtelektrode zu der zu markierenden Werkstückoberfläche zur Erzeugung elektrischer Funken hin- und wegzubewegen, die einen Materialabtrag und/oder eine Materialveränderung an der Werkstückoberfläche des metallischen Werkstückes zur Markierung der Werkstückoberfläche hervorrufen.

Bei einer möglichen Ausführungsform der erfindungsgemäßen Markierungsvorrichtung ist die Schweißdrahtelektrode an eine Schweißstromquelle des Schweißsystems angeschlossen, die eine an der Schweißdrahtelektrode anliegende elektrische Spannung und/oder einen durch die Schweißdrahtelektrode fließenden elektrischen Strom zur Einstellung des an der Werkstückoberfläche des metallischen Werkstückes hervorgerufenen Materialabtrages und/oder Materialveränderung regelt.

Bei einer weiteren möglichen Ausführungsform der erfindungsgemäßen Markierungsvorrichtung ragt das Drahtende der Schweißdrahtelektrode aus einem geführten Schweißbrenner des Schweißsystems heraus und ist während des Markierens der Werkstückoberfläche zu der zu markierenden Werkstückoberfläche mit einem einstellbaren Bewegungsprofil und/oder einer einstellbaren Bewegungsfrequenz hin- und wegbewegbar.

Die erfindungsgemäße Markierungsvorrichtung wird vorzugsweise zur Simulation eines nachfolgenden Schweißprozesses mit visuellem und/oder akustischem Signal verwendet.

Die Erfindung schafft ferner gemäß einem weiteren Aspekt ein Schweißsystem mit den in Patentanspruch 20 angegebenen Merkmalen.

Die Erfindung schafft demnach ein Schweißsystem mit einer Markierungsvorrichtung zur Markierung einer Werkstückoberfläche eines metallischen Werkstückes,
wobei ein Schweißbrenner des Schweißsystems mit einer abschmelzbaren Schweißdrahtelektrode entlang der zu markierenden Werkstückoberfläche des metallischen Werkstückes führbar ist und dabei die Markierungsvorrichtung geeignet ist, ein Drahtende der abschmelzbaren Schweißdrahtelektrode zu der zu markierenden Werkstückoberfläche zur Erzeugung elektrischer Funken hin- und wegzubewegen, wobei die Funken einen Materialabtrag und/oder eine Materialveränderung an der Werkstückoberfläche des metallischen Werkstückes zur Markierung der Werkstückoberfläche hervorrufen.

Vorteilhafterweise weist das erfindungsgemäße Schweißsystem einen sogenannten Push-Pull-Brenner auf, wodurch die Schweißdrahtelektrode mit einer Bewegungsfrequenz über 50Hz und bis zu 300Hz hin- und wegbewegt werden kann. Dieser Push-Pull-Brenner kann im Bereich des Brenners einen Drahtpufferspeicher beinhalten, der diese hohe Bewegungsfrequenz ermöglicht.

Bei einer bevorzugten Ausführungsform des erfindungsgemäßen Schweißsystems wird die abschmelzbare Schweißdrahtelektrode nahezu senkrecht hin- und wegbewegt.

Bei einer weiteren möglichen Ausführungsform des erfindungsgemäßen Schweißsystem ist das Schweißsystem ein CMT (Cold Metal Transfer)- Schweißsystem.

Im Weiteren werden mögliche Ausführungsformen des erfindungsgemäßen Verfahrens und der erfindungsgemäßen Vorrichtung zum Markieren einer Werkstückoberfläche eines metallischen Werkstückes unter Bezugnahme auf die beigefügten Figuren detailliert beschrieben.

Es zeigen:
- Fig. 1: eine schematische Darstellung einer möglichen Ausführungsform eines erfindungsgemäßen Schweißsystems zur Erläuterung eines Markiervorganges an einer Werkstückoberfläche eines metallischen Werkstückes;
- Fig. 2: eine Darstellung einer möglichen Ausführungsform eines erfindungsgemäßen Schweißsystems mit einer Markierungsvorrichtung zur Markierung einer Werkstückoberfläche eines metallischen Werkstückes;
- Fig. 3A, 3B, 3C: Zeitdiagramme zur Erläuterung der Funktionsweise eines Ausführungsbeispiels eines erfindungsgemäßen Verfahrens zum Markieren einer Werkstückoberfläche eines metallischen Werkstückes;
- Fig. 4A, 4B, 4C: Zeitdiagramme zur Erläuterung der Funktionsweise eines alternativen Ausführungsbeispiels eines erfindungsgemäßen Verfahrens zum Markieren einer Werkstückoberfläche eines metallischen Werkstückes.

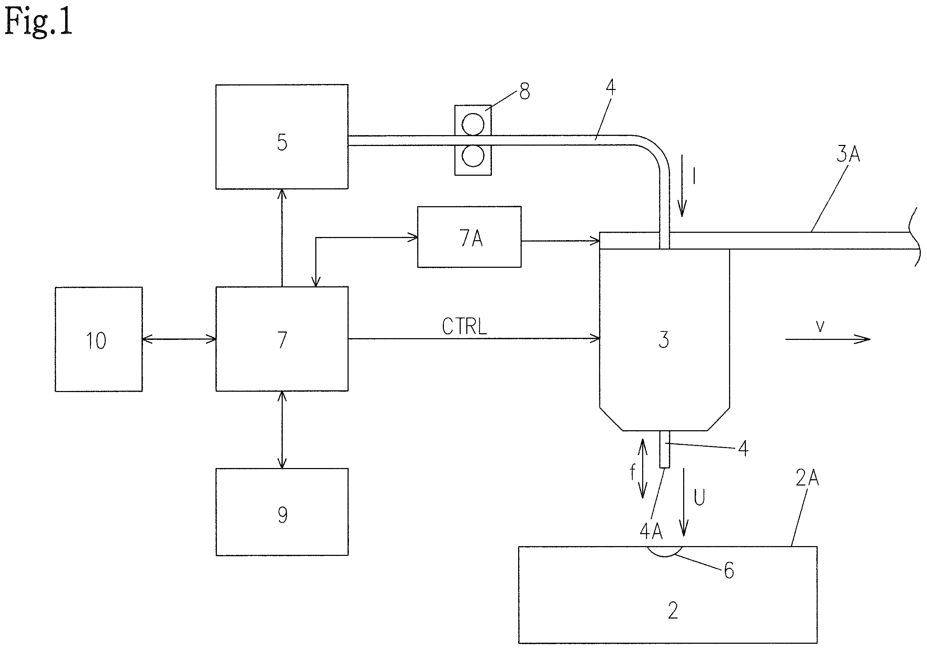

Wie man aus der schematischen Darstellung gemäß Fig. 1 erkennen kann, weist ein erfindungsgemäßes Schweißsystem 1 bei dem dargestellten Ausführungsbeispiel eine Markierungsvorrichtung zur Markierung einer Werkstückoberfläche 2A eines metallischen Werkstückes 2 auf. Die Markierungsvorrichtung ist dabei geeignet, einen Schweißbrenner 3 mit einer abschmelzbaren Schweißdrahtelektrode 4 des Schweißsystems 1 entlang einer zu markierenden Werkstückoberfläche 2A des metallischen Werkstückes 2 zu führen. Dabei wird ein Drahtende 4A der abschmelzbaren Schweißdrahtelektrode 4 zu der zu markierenden Werkstückoberfläche 2A des Werkstückes 2 zur Erzeugung elektrischer Funken hin- und wegbewegt. Diese elektrischen Funken rufen einen Materialabtrag und/oder eine Materialveränderung an der Werkstückoberfläche 2A des metallischen Werkstückes 2 zur Markierung an dessen Werkstückoberfläche 2A hervor. Die Materialveränderung kann dabei beispielsweise durch oberflächliches Anschmelzen bzw. durch Oxidation der Werkstückoberfläche 2A des metallischen Werkstückes 2 hervorgerufen werden. An der Schweißdrahtelektrode 4 liegt eine elektrische Spannung U an, wie in Fig. 1 dargestellt. Ferner fließt durch die Schweißdrahtelektrode 4 ein elektrischer Strom I, der von einer Schweißstromquelle 5 des Schweißsystems 1 stammt. Die an der Schweißdrahtelektrode 4 anliegende elektrische Spannung U und der durch die Schweißdrahtelektrode 4 fließende elektrische Strom I erzeugen elektrische Funken, die zu einem Materialabtrag an der Werkstückoberfläche 2A des metallischen Werkstückes 2 führen. Das Drahtende 4A der Schweißdrahtelektrode 4 wird wiederkehrend zu der Werkstückoberfläche 2A hinbewegt, bis ein elektrischer Kurzschluss mit dem metallischen Werkstück 2 entsteht und anschließend von der Werkstückoberfläche 2A wegbewegt, wobei beim Auftrennen des elektrischen Kurzschlusses jeweils ein elektrischer Funke erzeugt wird, der punktuell einen Materialabtrag und/oder eine Materialveränderung an der Werkstückoberfläche 2A des metallischen Werkstückes 2 zur Generierung eines Markierungspunktes 6 hervorruft. Die an der Werkstückoberfläche 2A des metallischen Werkstückes generierten Markierungspunkte 6 können eine in der Werkstückoberfläche 2A des Werkstückes 2 sichtbare Markierungsbahn bilden. Die dabei entstehende Markierung kann aus mehreren Makrierungsbahnen zusammmengesetzt sein. Auch lässt sich beispielsweise die Makierung verbreitern, falls die Makierungsbahn ein Pendeln bzw. eine Zick-Zack-Bewegung aufweist. Ebenso können leicht versetzte Kreis-, Ellipsen- bzw. Meanderbahnen dazu genutzt werden, die Makierung zu verbreitern. Die Schweißstromquelle 5 des Schweißsystems 1 regelt eine an der Schweißdrahtelektrode 4 anliegende elektrische Spannung U und/oder einen durch die Schweißdrahtelektrode 4 fließenden elektrischen Strom I zur Einstellung des an der Werkstückoberfläche 2A des metallischen Werkstückes 2 hervorgerufenen Materialabtrages und somit den Umfang des erzeugten Markierungspunktes 6.

Wie in Fig. 1 schematisch dargestellt, weist das Schweißsystem 1 eine Steuerung 7 auf, welche ein Bewegungsprofil und/oder eine Bewegungsfrequenz des sich zu der zu markierenden Werkstückoberfläche 2A hin- und wegbeweglichen Drahtendes 4A der Schweißdrahtelektrode 4 steuert. Ferner steuert die Steuerung 7 des Schweißsystems 1 die Schweißstromquelle 5 des Schweißsystems 1 zur Einstellung der an der Schweißdrahtelektrode 4 anliegenden elektrischen Spannung U und/oder zur Einstellung des durch die Schweißdrahtelektrode 4 fließenden elektrischen Stromes I.

Während eines Markierungsvorganges bzw. während eines Markierungsbetriebsmodus des Schweißsystems 1 wird dabei die elektrische Spannung U und der durch die Schweißdrahtelektrode 4 fließende elektrische Strom I derart eingestellt, dass sich elektrische Funken bilden, welche einen Materialabtrag und/oder eine Materialveränderung an der Werkstückoberfläche 2A des metallischen Werkstückes 2 hervorrufen, jedoch kein Abschmelzen der abschmelzbaren Schweißdrahtelektrode 4 erfolgt.

Bei einer möglichen Ausführungsform des in Fig. 1 schematisch dargestellten Schweißsystems 1 wird der Schweißbrenner 3 während eines Markiervorganges zur Markierung der Werkstückoberfläche 2A durch einen Roboterarm 3A automatisch geführt. Die Bewegungsgeschwindigkeit des Schweißbrenners 3, mit welcher das Drahtende 4A der Schweißdrahtelektrode 4 entlang der zu markierenden Werkstückoberfläche 2A des metallischen Werkstückes 2 geführt wird, ist einstellbar und kann mittels einer Steuerung 7A des Roboterarms 3A gesteuert werden. Darüber hinaus kann die Steuerung 7 des Schweißsystems 1 in kommunikativer Verbindung mit Steuerung 7A des Roboterarms 3A stehen, um beispielsweise das Bewegungsprofil der Hin- und Wegbewegung des Drahtendes 4A an die Bewegungsgeschwindigkeit des Schweißbrenners 3 anzupassen. Alternativ ist vorstellbar, dass die Funktionen der Steuerung 7 und der Steuerung 7A in einer nicht näher dargestellten übergeordneten Steuerung gemeinsam realisiert sind.

Bei einer möglichen Ausführungsform des in Fig. 1 schematisch dargestellten Schweißsystems 1 wird der Schweißbrenner 3 während eines Markiervorganges zur Markierung der Werkstückoberfläche 2A durch einen Roboterarm 3A entsprechend einem programmierten Sollverlauf einer in einem nachfolgenden Schweißvorgang herzustellenden Schweißnaht automatisch geführt. Hierbei steuert die Steuerung 7A die Bewegung des Schweißbrenners 3 entsprechend dem programmierten Sollverlauf. Das Drahtende 4A der Schweißdrahtelektrode 4 ragt aus dem geführten Schweißbrenner 3 des Schweißsystems 1 heraus und wird während des Markiervorganges der Werkstückoberfläche 2A relativ zu der zu markierenden Werkstückoberfläche 2A mit einem einstellbaren Bewegungsprofil und/oder einer einstellbaren Bewegungsfrequenz f hin- und wegbewegt.

Bei einer möglichen Ausführungsform wird eine Abweichung zwischen einem Istverlauf der in der Werkstückoberfläche 2A erzeugten Markierungsbahn und einem Sollverlauf der Schweißnaht zur Qualitätskontrolle und/oder Nachjustierung einer Schweißbrennerführung gemessen. Im einfachsten Fall kann die Bestimmung der Abweichung mittels einer manuellen Differenzbestimmung zwischen Istverlauf und Sollverlauf durchgeführt werden. Bei einer anderen Ausführungsform kann eine Messeinrichtung zur Messung einer Abweichung zwischen dem Istverlauf einer Markierungsbahn und dem Sollverlauf einer Schweißnaht vorgesehen sein, um mittels einer übergeordneten Steuerung die Differenz automatisch erfassen und auswerten zu können.

Bei der in Fig. 1 dargestellten Ausführungsform weist das Schweißsystem 1 ferner eine Drahtvorschubeinrichtung 8 auf, welche zur Nachförderung des Schweißdrahtes 4 dient. Ein hochdynamischer Drahtantrieb an dem Schweißbrenner 3 ist auf eine hohe Bewegungsgeschwindigkeit ausgelegt und ruft eine hochfrequente Hin- und Herbewegung der Schweißdrahtelektrode 4 mit einer Bewegungsfrequenz f hervor. Der Drahtantrieb des Schweißbrenners 3 ist dabei auf eine hohe Bewegungsgeschwindigkeit ausgelegt. Die Nachförderung der während des Schweißbetriebs abschmelzenden Schweißdrahtelektrode 4 erfolgt hingegen mithilfe der Drahtvorschubeinrichtung 8.

Bei einer möglichen Ausführungsform des erfindungsgemäßen Schweißsystems 1 wird eine Kontraststärke einer an der Werkstückoberfläche 2A erzeugten Markierungsbahn, die sich aus Markierungspunkten 6 zusammensetzt zur Veränderung von Markierungsparametern eingestellt. Diese Markierungsparameter umfassen bei einer möglichen Ausführungsform die durch die Schweißstromquelle 5 geregelte Spannungs- und/oder Stromstärke, das Bewegungsprofil und/oder die Bewegungsfrequenz der Schweißdrahtelektrode 4 und/oder die Bewegungsgeschwindigkeit des Schweißbrenners 3, mit welcher das Drahtende 4A der Schweißdrahtelektrode 4 entlang der Werkstückoberfläche 2A des Werkstückes 2 geführt wird. Die beim Markieren der Werkstückoberfläche 2A verwendeten Markierungsparameter können bei einer möglichen Ausführungsform als Datensatz in einem Datenspeicher 9 des Schweißsystems 1 abgespeichert werden und für einen nachfolgenden Markierungsvorgang wieder aus dem Datenspeicher 9 des Schweißsystems 1 durch die Steuereinheit 7 ausgelesen werden. Bei einer möglichen Ausführungsform des erfindungsgemäßen Schweißsystems 1 weist dieses ein Nutzerinterface 10 auf, welches erlaubt, verschiedene Markierungsparameter für den Markierungsvorgang manuell einzustellen. Bei einer möglichen Ausführungsform hat ein Schweißer des Schweißsystems 1 die Möglichkeit, verschiedene Markierungsparameter mithilfe der Nutzerschnittstelle 10 manuell einzustellen und einen Markierungsvorgang durchzuführen. Ist der Nutzer beispielsweise mit der hergestellten Markierungsbahn zufrieden, kann er die eingestellten Markierungsparameter als Datensatz in den Datenspeicher 9 des Schweißsystems 1 abspeichern und für einen späteren Markierungsvorgang wiederverwenden. Weiterhin kann der Datenspeicher 9 verschiedene vorkonfigurierte Datensätze enthalten, um Markierungsbahnen mit unterschiedlichen Kontraststärken zu erzeugen. Für verschiedene Kontraststärken einer an der Werkstückoberfläche 2A gebildeten Markierungsbahn und/oder für unterschiedliche Materialien des metallischen Werkstückes 2 und/oder für unterschiedliche Schweißdrahtelektroden 4 kann ein zugehöriger Datensatz von geeigneten Markierungsparametern in dem Datenspeicher 9 abgespeichert sein und zur Markierung der Werkstückoberfläche 2A des metallischen Werkstückes 2 in einem Markierungsvorgang durch die Steuereinheit 7 ausgelesen werden. Bei einer möglichen Ausführungsform weist die Nutzerschnittstelle 10 des Schweißsystems 1 eine Anzeigeeinheit auf, welche dem Nutzer bzw. Schweißer die eingestellten Markierungsparameter, welche für den Markierungsvorgang verwendet werden, anzeigt.

Bei einer weiteren möglichen Ausführungsform des erfindungsgemäßen Schweißsystems 1 kann der Schweißer bzw. Nutzer über die Nutzerschnittstelle 10 zusätzlich Daten bzw. Informationen hinsichtlich des Materials des metallischen Werkstückes 2 eingeben. In Abhängigkeit von dem eingegebenen Material des Werkstückes 2 kann aus dem Datenspeicher 9 ein dafür geeigneter Datensatz von Markierungsparametern ausgelesen und für den Markierungsvorgang verwendet werden. Bei einer möglichen Ausführungsform des erfindungsgemäßen Schweißsystems 1 wird während des Markierens der Werkstückoberfläche 2A des metallischen Werkstückes 2 die Werkstückoberfläche 2A durch ein zugeführtes Schutzgas vor Oxidation geschützt. Bei einer möglichen Ausführungsform kann der Nutzer bzw. Schweißer des Schweißsystems 1 über die Nutzerschnittstelle 10 die Zufuhr von Schutzgas während des Markiervorganges einstellen, beispielsweise aktivieren bzw. deaktivieren. Bei einer möglichen Ausführungsform des erfindungsgemäßen Schweißsystems 1 ist das Schweißsystem 1 ein Metallschutzgas-Schweißsystem, bei dem ein Metallaktivgasverfahren (MAG) oder ein Metallinertgasverfahren (MIG) eingesetzt wird.

Bei dem erfindungsgemäßen Schweißsystem 1, wie es schematisch in Fig. 1 dargestellt ist, erlaubt die hochdynamisch reversierende Schweißdrahtelektrode 4, Markierungspunkte 6 mit hoher Anzahl mit geringfügigem Materialabtrag und/oder eine Materialveränderung zu setzen. Die aufeinanderfolgenden Markierungspunkte 6 ergeben eine sichtbare Markierungsbahn in der Werkstückoberfläche 2A des Werkstückes 2.

Das Schweißdrahtende 4A der Schweißdrahtelektrode 4 bildet einen Werkzeugbezugspunkt TCP (Tool Center Point) des Schweißsystems 1. Der Werkzeugbezugspunkt TCP bildet einen Punkt am Ende einer kinematischen Kette und bildet eine Zielgröße, für die Positionierungsanforderungen gelten, die sich aus dem Bearbeitungsvorgang ergeben.

Bei einer möglichen Ausführungsform des erfindungsgemäßen Schweißsystems 1 ist der Schweißbrenner 3 an einem Roboterarm 3A angebracht, der entsprechend einem programmierten Sollverlauf einer in einem nachfolgenden Schweißvorgang herzustellenden Schweißnaht während des Markierungsvorganges automatisch geführt wird. Dieser Sollverlauf bezieht sich vorzugsweise auf den Verlauf des Werkzeugbezugspunktes TCP, d.h. auf den Sollverlauf des Schweißdrahtendes 4A der Schweißdrahtelektrode 4. Der reale TCP kann sich aufgrund einer durch die Drahtdressur hervorgerufenen Drahtkrümmung von einem SOLL-TCP bzw. idealen TCP unterscheiden. Auch andere Einflüsse, wie Wärmeausdehnung des Roboterarms, sowie ein Spiel in beweglichen Teilen kann zu einer Abweichung des realen TCPs führen. Mit dem erfindungsgemäßen Verfahren kann durch Aufbringen einer Markierungsbahn der reale TCP auf der Werkstückoberflache 2A visualisiert werden.

Bei einer alternativen Ausführungsform des erfindungsgemäßen Schweißsystems 1 wird der Schweißbrenner 3 während des Markierens der Werkstückoberfläche 2A, insbesondere zur Beschriftung der Werkstückoberfläche 2A, handgeführt. Die bei dem Markierungsvorgang erzeugten elektrischen Funken erzeugen in der Werkstückoberfläche 2A sichtbare Markierungsbahnen, die zur Beschriftung der Werkstückoberfläche 2A genutzt werden können. Beispielsweise kann ein Nutzer bzw. Schweißer auf diese Weise in die Werkstückoberfläche 2A ein Datum einschreiben, welches den Zeitpunkt der Markierung bzw. Schweißung angibt. Beispielsweise kann der Nutzer bzw. Schweißer auch ein Kürzel oder eine Unterschrift auf die Werkstückoberfläche 2A des Werkstückes 2 schreiben, damit festgestellt werden kann, wer die Schweißung vorgenommen hat.

Bei einer weiteren möglichen Ausführungsform wird die Markierungsvorrichtung zur Simulation eines nachfolgenden Schweißprozesses mit einem visuellen und/oder akustischen Signal verwendet. Ein akustisches Signal der Bewegungsfrequenz simuliert dabei Schweißparameter des nachfolgenden Schweißvorganges. Dabei können einzelne Schweißparameter, wie beispielsweise Schweißgeschwindigkeit, Brenneranstellung, Abschmelzleistung, Länge des freien Drahtendes (Stickout) oder Korrekturfaktoren hörbar gemacht werden. Dazu kann eine entsprechende Änderung des Schweißparameters auch in der Bewegungsfrequenz der Hin- und Wegbewegung des Schweißdrahtendes 4A erfolgen, um die akustische Signaländerung zu erreichen. Der nachfolgende Schweißvorgang bzw. Schweißprozess ist vorteilhaft visualisierbar, da die bei dem Markierungsvorgang erzeugten elektrischen Funken nicht so hell leuchten wie der bei dem eigentlichen Schweißvorgang entstehende Lichtbogen. Die beim Markierungsvorgang entstehenden elektrischen Funken können direkt von dem Nutzer beobachtet werden. Bei dieser Ausführungsform bietet somit das Schweißsystem 1 der erfindungsgemäßen Markierungsvorrichtung ein Trainingsgerät zum Unterricht von Schweißern. Bei dieser Ausführungsform kann das Schweißsystem 1 zur Schulung von Personen verwendet werden, da eine akustische und/oder optische Simulation eines Schweißprozesses durchgeführt werden kann.

Bei einer weiteren möglichen Ausführungsform des erfindungsgemäßen Schweißsystems 1 handelt es sich bei dem Schweißsystem 1 um ein CMT (Cold Metal Transfer)- Schweißsystem, das sich zum CMT-Schweißen eignet. Bei dieser Ausführungsform erfolgt nach abgeschlossenem Markierungsvorgang ein Schweißvorgang. Beispielsweise handelt es sich beim dem Schweißprozess um einen CMT Schweißprozess, hierbei wird durch die Schweißstromquelle 5 vorzugsweise ein pulsierender Schweißstrom bereitgestellt und zusätzlich wird die Schweißdrahtelektrode 4 mit einer hohen Frequenz vor- und zurückbewegt. Sobald die Schweißstromquelle 5 einen Kurzschluss erkennt, startet eine Rückwärtsbewegung der Schweißdrahtelektrode 4 bei gleichzeitig abgesenktem Schweißstrom. Dabei löst sich ein in der vorrausgehenden Lichtbogenphase gebildeter Tropfen von der Schweißdrahtelektrode 4, ohne dass hierbei Spritzer entstehen. Der gebildete Schweißtropfen löst sich aufgrund der Drahtbewegung leichter von der Schweißdrahtelektrode 4 ab und unterstützt somit ein nahezu spritzerfreies Schweißen. Die reversierende Schweißdrahtelektrode 4 kann bei einer möglichen Ausführungsform mit einer relativ hohen Frequenz von mehr als 50 Hz hin- und her bewegt werden. Nach Ablösen des Schweißtropfens wird die Schweißdrahtelektrode 4 wieder vorwärts geführt und der Zyklus beginnt von Neuem. Das CMT-Schweißverfahren eignet sich für alle gängigen schweißbaren Metalle wie Stahl, Aluminium, CrNi Stähle und auch für Mischverbindungen wie Stahl mit Aluminium.

Vor oder nach der Durchführung des CMT-Schweißvorganges kann mithilfe des erfindungsgemäßen Markierungsverfahrens die Werkstückoberfläche 2A des zu bearbeitenden metallischen Werkstückes 2 ohne zusätzlichen Hardwareaufwand markiert werden.

Bei einer möglichen Ausführungsform des erfindungsgemäßen Schweißsystems 1 werden an der Werkstückoberfläche 2A des metallischen Werkstückes 2 Markierungspunkte 6 bzw. Markierungsbahnen zur Darstellung von Daten generiert. Diese Daten umfassen beispielsweise einen lesbaren Code, insbesondere einen QR-Code. Auf diese Weise können in einfacher Weise relevante Daten hinsichtlich des bearbeiteten Werkstückes 2 bzw. des Bearbeitungsvorganges dauerhaft mit dem Werkstück 2 verbunden werden und nachfolgend mithilfe eines Lesegerätes ausgelesen werden. Die ausgelesenen Daten können beispielsweise bei der Qualitätskontrolle oder bei der Wartung einer Komponente, welche das Werkstück 2 beinhaltet, verwendet werden.

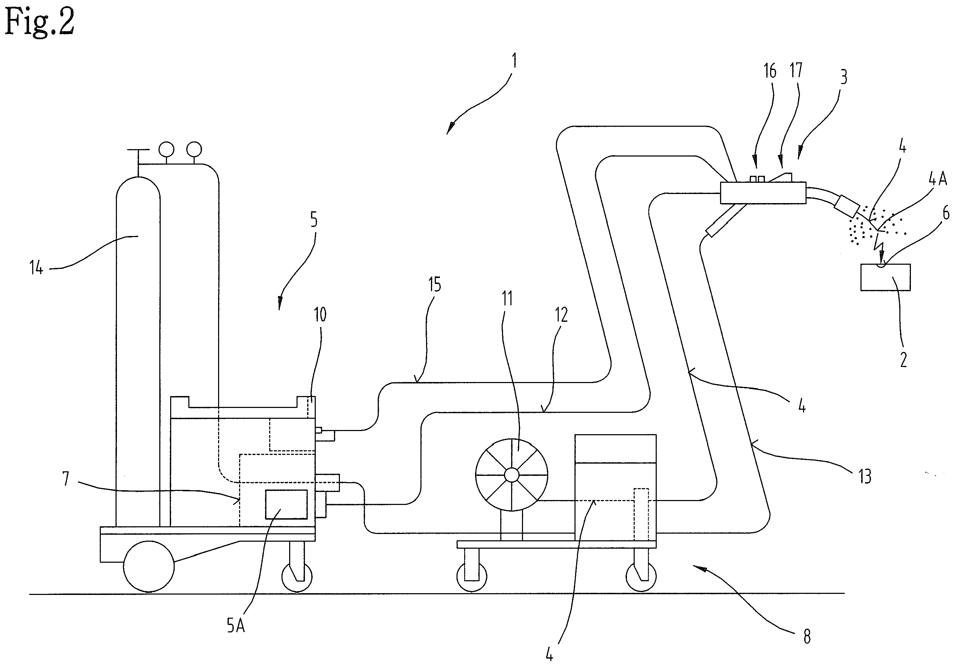

Fig. 2 zeigt schematisch ein Ausführungsbeispiel eines Schweißsystems 1, welches eine erfindungsgemäße Markierungsvorrichtung enthält. Das in Fig. 2 dargestellte Schweißsystem 1 eignet sich für verschiedene Schweißverfahren, insbesondere für MIG/MAG-Schweißverfahren. Das Schweißsystem 1 erlaubt es, eine Werkstückoberfläche 2A eines metallischen Werkstückes 2 zu markieren. Dabei wird ein Schweißbrenner 3 des Schweißsystems 1 mit einer Schweißdrahtelektrode 4 entlang der zu markierenden Werkstückoberfläche 2A geführt. Das Drahtende 4A der Schweißdrahtelektrode 4 wird zu der zu markierenden Werkstückoberfläche 2A hin- und wegbewegt. Die Schweißdrahtelektrode 4 kann die abschmelzbare Schweißdrahtelektrode des nachfolgenden Schweißprozesses sein. Es ist allerdings auch möglich eine nur für den Markierungsvorgang eingesetzte Schweißdrahtelektrode 4, beispielsweise aus Wolfram, zu verwenden. Das Schweißsystem 1 besitzt eine Schweißstromquelle 5 mit einem Leistungsteil 5A. Ferner besitzt das Schweißsystem 1 eine Steuervorrichtung 7. Die Steuervorrichtung 7 dient zur Ansteuerung des Leistungsteils 5A der Schweißstromquelle 5 sowie zur Ansteuerung eines Drahtvorschubgerätes 8, welches die Schweißdrahtelektrode 4 befördert. Die Schweißdrahtelektrode 4 kann dabei von einer Vorratstrommel 11 des Schweißsystems 1 abgewickelt werden. Ein Strom zum Erzeugen elektrischer Funken in einem Markierungsvorgang oder zum Erzeugen eines Lichtbogens in einem nachfolgenden Schweißvorgang kann bei einer möglichen Ausführungsform über eine Stromversorgungsleitung 12 von dem Leistungsteil 5A der Schweißstromquelle 5 dem Schweißbrenner 3 bzw. der darin geführten Schweißdrahtelektrode 4 zugeführt werden. Der Stromkreis wird über eine nicht näher dargestellte Leitung vom Werkstück 2 zum Leistungsteil 5A geschlossen.

Mit der Zusammensetzung des Schutzgases kann das Aussehen der Markierungsspur beeinflusst werden. Allgemein gilt, dass mit zunehmendem Aktivanteil, d.h. CO₂ oder Sauerstoff, die Markierungsspur dunkler und schmaler wird. Bei Verwendung von Rein-Argon (inertes Gas) ist die Markierungsspur auf allen Oberflächen relativ hell und breit, wobei die Breite mit zunehmender Geschwindigkeit abnimmt. Ohne Schutzgas ist die Markierungsbahn dunkel und schmal und die Breite ändert sich nicht mit der Geschwindigkeit.

Ohne Schutzgas kann es durch Oxidation zu einer unerwünschten Bildung einer isolierenden Oberfläche kommen, insbesondere falls die Elektrode aus Aluminium oder einer Aluminiumlegierung besteht. Hierdurch besteht die Gefahr, dass kein Kurzschluss erkannt wird, was den Markierungsprozess stören kann.

Bei dem in Fig. 2 dargestellten Ausführungsbeispiel verfügt der Schweißbrenner 3 zusätzlich über eine Versorgungsleitung 13 für ein Schutzgas. Während des Markierens der Werkstückoberfläche 2A des metallischen Werkstückes 2 kann die Werkstückoberfläche 2A durch ein zugeführtes Schutzgas vor Oxidation geschützt werden. Bei einer möglichen Ausführungsform wird dieses Schutzgas aus einem Schutzgasspeicher 14 des Schweißsystems 1 entnommen, wie in Fig. 2 dargestellt. Die von der Vorratstrommel 11 durch das Drahtvorschubgerät 8 abgewickelte Schweißdrahtelektrode 4 wird bei der in Fig. 2 dargestellten Ausführungsform über eine Stromleitung 12 hindurch dem Schweißbrenner 3 zugeführt, wobei das Drahtende 4A der Schweißelektrode 4 während des Markierungsvorganges aus dem Schweißbrenner 3 hervorragt und reversierend hin- und herbewegt wird.

Bei dem in Fig. 2 dargestellten Ausführungsbeispiel ist der Schweißbrenner 3 ferner über eine Leitung 15 mit einem Kühlkreislauf des Schweißsystems 1 verbunden. Bei dem in Fig. 2 dargestellten Ausführungsbeispiel verfügt das Schweißsystem 1 an der Schweißstromquelle 5 über eine Nutzerschnittstelle 10 mit einer Eingabe- und/oder Anzeigeeinrichtung. Ferner kann eine Eingabevorrichtung 16 und eine Ausgabevorrichtung 17 an dem Schweißbrenner 3 des Schweißsystems 1 vorgesehen sein, wie in Fig. 2 gezeigt. Bei einer möglichen Ausführungsform hat der Nutzer bzw. Schweißer die Möglichkeit, an der Nutzerschnittstelle 10 und/oder an der Eingabeeinrichtung 16 des Schweißbrenners 3 zwischen einem Markierungsbetriebsmodus und einem Schweißbetriebsmodus des Schweißsystems 1 umzuschalten bzw. an der Nutzerschnittstelle 10 zwischen Schweißverfahren oder Markierungsverfahren auszuwählen. Weiterhin hat der Nutzer die Möglichkeit, über die Nutzerschnittstelle 10 an der Schweißstromquelle 5 für den Markierungsvorgang verschiedene Markierungsparameter einzustellen. Diese Markierungsparameter sind bei einer möglichen Ausführungsform die durch die Schweißstromquelle 5 geregelte Spannungs- und/oder Stromstärke, ein Bewegungsprofil und/oder die Bewegungsfrequenz f der Schweißdrahtelektrode 4 und/oder die Bewegungsgeschwindigkeit des Schweißbrenners 3, mit welcher ein Drahtende 4A der Schweißdrahtelektrode 4 entlang der Werkstückoberfläche 2A des Werkstückes 2 geführt wird. Bei einer möglichen Ausführungsform wird der Schweißbrenner 3 des in Fig. 2 dargestellten Schweißsystems 1 durch einen Roboterarm 3A geführt. Alternativ kann der Schweißbrenner 3 des in Fig. 2 dargestellten Schweißsystems 1 während eines Markierungsvorganges durch einen Nutzer handgeführt werden.

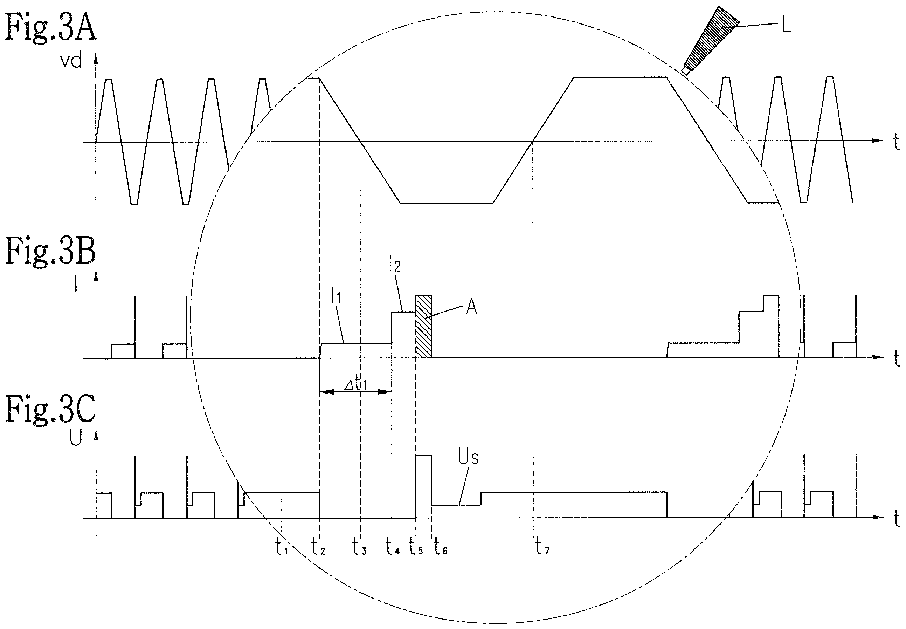

Die Figuren 3A, 3B, 3C zeigen Zeitverläufe zur Erläuterung der Funktionsweise des erfindungsgemäßen Markierungsverfahrens. Fig. 3A zeigt die Drahtvorschubgeschwindigkeit V_{D} der Schweißdrahtelektrode 4 über die Zeit. Fig. 3B zeigt einen durch die Schweißdrahtelektrode 4 hindurchfließenden Strom I. Fig. 3C zeigt eine an der Schweißdrahtelektrode 4 anliegende Spannung U.

Wie man in Fig. 3A erkennen kann, wird die Schweißdrahtelektrode 4 vor- und zurückbewegt, d.h. die Schweißdrahtelektrode 4 weist abwechselnd eine positive Drahtvorschubgeschwindigkeit V_{D} und eine negative Drahtvorschubgeschwindigkeit V_{D} auf, wie in Fig. 3A gezeigt. In den Figuren 3A, 3B, 3C ist durch eine symbolische Vergrößerungslupe L angedeutet ein Zeitabschnitt gedehnt dargestellt. Während des Markierungsvorganges wird die Schweißdrahtelektrode 4 im abgehobenen Zustand im Zeitpunkt t1 vorwärts in Richtung auf die Werkstückoberfläche 2A des Werkstückes 2 bewegt. Dabei wird die Schweißdrahtelektrode 4 mit einer Spannung U beaufschlagt, um den Kurzschlusseintritt zum Zeitpunkt t2 am Spannungseinbruch erkennen zu können. Wird ein Kontakt der Schweißdrahtelektrode 4 mit der Werkstückoberfläche 2A des metallischen Werkstückes 2 festgestellt, wird die Drahtvorschubgeschwindigkeit V_{D} verringert, d.h. die Schweißdrahtelektrode 4 wird abgebremst. Dabei kann der Kontakt der Schweißdrahtelektrode 4 mit der Werkstückoberfläche 2A durch Erkennung eines Kurzschlusses, Erhöhung des Motorstroms bzw. Motormoments des Drahtvorschubs oder aber auch durch Berechnung des zurückgelegten Wegs festgestellt werden. Bei Kurzschlusseintritt bricht die Spannung deutlich erkennbar ein. Ein relativ geringer, messbarer Strom I1 wird aufgeprägt, um den Kontakt der Schweißdrahtelektrode 4 mit der Werkstückoberfläche 2A weiter zu erkennen. Dieser Strom I1 überschreitet für eine vorbestimmte erste Zeitdauer Δt1, vorzugsweise 400us, nach dem Kurzschlusseintritt ein vorbestimmtes erstes Stromniveau I1, vorzugsweise 30A, nicht. Damit soll ein Festkleben der Drahtelektrode verhindert werden. Zum Zeitpunkt t3 wird die Drahtvorschubgeschwindigkeit V_{D} negativ, d.h. die Schweißdrahtelektrode 4 wird rückwärts weg von der Werkstückoberfläche 2A bewegt. Das Drahtende 4A der Schweißdrahtelektrode 4 wird wiederkehrend zu der Werkstückoberfläche 2A hinbewegt, bis ein elektrischer Kurzschluss mit dem metallischen Werkstück 2 entsteht. Sobald der elektrische Kurzschluss mit dem metallischen Werkstück 2 entsteht, wird das Drahtende 4A der Schweißdrahtelektrode 4 von der Werkstückoberfläche 2A wegbewegt. Zum Zeitpunkt t4 vor dem Kurzschlussaufbruch t5, der durch das Abheben der Schweißdrahtelektrode 4 bewirkt wird, ist der Strom I auf ein vorbestimmtes zweites Stromniveau I2, vorzugsweise größer 10A, eingestellt, um die Zündung eines Funken beim Kurzschlussaufbruch sicher zu stellen. Soll der Zeitpunkt t4 nur knapp vor dem Zeitpunkt t5 des Kurzschlussaufbruchs liegen, kann der Zeitpunkt t5 aufgrund des Bewegungsprofils der Schweißdrahtelektrode 4 vorausbestimmt werden. Zum Zeitpunkt t5 kommt es, wie in Fig. 3B dargestellt, zu einer Funkenzündung, d.h. es entsteht ein elektrischer Funke, der punktuell einen Materialabtrag und/oder eine Materialveränderung an der Werkstückoberfläche 2A des metallischen Werkstückes 2 zur Generierung eines Markierungspunktes 6 hervorruft. Wie in Fig. 3B durch die schraffierte Fläche A dargestellt, wird nach dem Kurzschlussaufbruch der Funken entsprechend eines vorbestimmten Strom- und Zeitprofils aufrecht erhalten. Die Ausprägung des Markierungspunkts wird mittels der Energie des Funkens, die proportional zur Fläche A im Zeitdiagramm des Stromverlaufs ist, beeinflusst. Für Markierungspunkte günstige Strom-Zeit-Flächen liegen zwischen 100*µ*As und 20mAs. Durch das Absenken der Spannung U unterhalb einer vordefinierten Schwelle Us erlischt der Funke zum Zeitpunkt t6. Vorzugsweise liegt Us unterhalb von 12V. Darauf sinkt der Strom I durch die Schweißdrahtelektrode 4 auf null ab, wie in Fig. 3B erkennbar. Die Zeitdauer zwischen der Zündung von Funken und dessen Erlöschen ist beispielsweise über oben erwähntes Strom-ZeitProfil einstellbar. Sobald die Drahtvorschubgeschwindigkeit V_{D} aus der Rückwärtsbewegung zurück in die Vorwärtsbewegung übergeht, oder der Strom gegen 0A abgesunken ist, wird die Spannung U wieder erhöht, wie in Fig. 3C dargestellt, und verharrt auf dem erhöhten Spannungsniveau, um den nächsten Kurzschluss durch die Berührung von Schweißdrahtelektrode 4 mit Werkstückoberfläche 2A sicher zu erkennen. Dies ist in Fig. 3C zum Zeitpunkt t7 dargestellt, bei dem die Drahtvorschubgeschwindigkeit V_{D} wieder positiv wird. Der Vorgang wiederholt sich zyklisch.

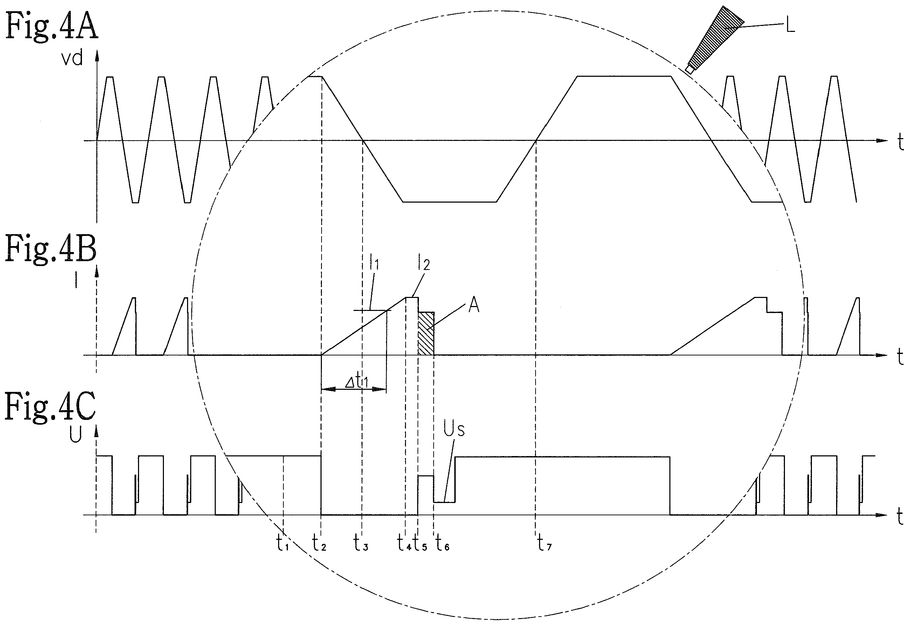

Auch die Figuren 4A, 4B, 4C zeigen Zeitverläufe zur Erläuterung der Funktionsweise des erfindungsgemäßen Markierungsverfahrens. Fig. 4A zeigt die Drahtvorschubgeschwindigkeit V_{D} der Schweißdrahtelektrode 4 über die Zeit. Fig. 4B zeigt einen durch die Schweißdrahtelektrode 4 hindurchfließenden Strom I. Fig. 4C zeigt eine an der Schweißdrahtelektrode 4 anliegende Spannung U. Alternativ zum Ausführungsbeispiel in Fig. 3A-3C steigt der Strom I in diesen Zeitverläufen nach dem Kurzschlusseintritt zum Zeitpunkt t2 rampenförmig an. Auch hier überschreitet I für eine vorbestimmte erste Zeitdauer Δt1, vorzugsweise 400us, nach dem Kurzschlusseintritt ein vorbestimmtes erstes Stromniveau I1, vorzugsweise 30A, nicht. In der Fig. 4B ist hierfür ein Niveau von etwa 20A für I1 eingezeichnet. Zum Zeitpunkt t4 vor dem Kurzschlussaufbruch t5, der durch das Abheben der Schweißdrahtelektrode 4 bewirkt wird, wird der Strom I auf mindestens ein vorbestimmtes zweites Stromniveau I2 gesetzt. Im Ausführungsbeispiel ergibt sich der Wert für I2 durch einen weiteren linearen Anstieg der Rampe. Beim Spannungsverlauf in Fig. 4C ist alternativ zu Fig. 3C die Spannung U zum Zeitpunkt t1 bzw. t7 zur Detektion eines neuerlichen Kurzschlusseintritts größer als die Spannung U in der Funkenphase t5-t6. Dies kann die Erkennung des Kurzschlusseintritts vereinfachen.

Mit dem erfindungsgemäßen Markierungsverfahren ist es möglich, die Lage einer nachfolgend auszuführenden Schweißnaht entlang einer Schweißbahn bzw. Schweißnaht zu markieren, wobei diese Istposition vor dem eigentlichen Schweißvorgang visuell automatisiert oder auch manuell überprüft werden kann. Bei Serienfertigung kann eine Abweichung von einer gewünschten Schweißbahn stichprobenartig überprüft und korrigiert werden. Eine Markierungsbahn kann mit unterschiedlicher Kontraststärke auf metallischen Oberflächen durch Variation der Markierungsparameter aufgetragen werden.

Das erfindungsgemäße Markierungsverfahren eignet sich insbesondere für CMT- Schweißsysteme , da keine zusätzlichen Hardwarekomponenten zur Durchführung des Markierungsverfahrens benötigt werden.

Die Schweißdrahtelektrode 4 wird zur Markierung der Werkstückoberfläche 2A vorzugsweise senkrecht zu der Werkstückoberfläche 2A hin- und zurückbewegt. Alternativ kann auch der Brenneranstellwinkel zur Werkstückoberfläche 2A eines eventuell nachfolgenden Schweißvorgangs die Bewegungsrichtung der Schweißdrahtelektrode 4 vorgeben. Das erfindungsgemäße Markierungsverfahren erlaubt vor dem eigentlichen Schweißvorgang, eine Simulation des Schweißvorganges gewissermaßen in einer "Trockenfahrt" durchzuführen. Für unterschiedliche Schweißnähte, beispielsweise Steigschweißnähte oder Fallschweißnähte, können unterschiedliche Markierungsparameter zur Simulation des betreffenden Schweißvorganges verwendet werden. Das erfindungsgemäße Verfahren eignet sich vor allem zur Unterstützung von automatisiertem Schweißen, kann jedoch auch bei Handschweißgeräten zur Markierung bzw. Beschriftung von Werkstücken 2 verwendet werden. Darüber hinaus kann das erfindungsgemäße Markierungsverfahren zu Schulungszwecken verwendet werden, um Schweißparameter, wie Anstellwinkel, Abschmelzleistung, Korrekturen u.s.w., akustisch zu veranschaulichen.

## Patentansprüche

1. Verfahren zum Markieren einer Werkstückoberfläche (2A) eines metallischen Werkstückes (2),
bei dem ein Schweißbrenner (3) mit einer Schweißdrahtelektrode (4) entlang der zu markierenden Werkstückoberfläche (2A) geführt und dabei ein Drahtende (4A) der Schweißdrahtelektrode (4) zu der zu markierenden Werkstückoberfläche (2A) hin- und wegbewegt wird,
wobei eine an der Schweißdrahtelektrode (4) anliegende elektrische Spannung (U) und/oder ein durch die Schweißdrahtelektrode (4) fließender elektrischer Strom (I) elektrische Funken, die einen Materialabtrag und/oder eine Materialveränderung an der Werkstückoberfläche (2A) des metallischen Werkstückes (2) zur Markierung der Werkstückoberfläche (2A) hervorrufen, erzeugen.

2. Verfahren nach Anspruch 1,
wobei die Schweißdrahtelektrode (4) aus einem während eines Schweißprozesses abschmelzbaren Zusatzmaterialwerkstoff besteht.

3. Verfahren nach Anspruch 1 oder 2,
wobei das Drahtende (4A) der Schweißdrahtelektrode (4) wiederkehrend zu der Werkstückoberfläche (2A) hinbewegt wird, bis ein elektrischer Kurzschluss mit dem metallischen Werkstück (2) entsteht und anschließend von der Werkstückoberfläche (2A) wegbewegt wird, wobei beim Auftrennen des elektrischen Kurzschlusses jeweils ein elektrischer Funke erzeugt wird, der punktuell einen Materialabtrag und/oder eine Materialveränderung an der Werkstückoberfläche (2A) des metallischen Werkstückes (2) zur Generierung eines Markierungspunktes (6) hervorruft.

4. Verfahren nach Anspruch 3,
wobei die an der Werkstückoberfläche (2A) des metallischen Werkstückes (2) generierten Markierungspunkte (6) eine in der Werkstückoberfläche (2A) sichtbare Markierungsbahn bilden.

5. Verfahren nach einem der vorangehenden Ansprüche 1 bis 4, wobei die an der Schweißdrahtelektrode (4) anliegende elektrische Spannung (U) und/oder der durch die Schweißdrahtelektrode (4) fließende elektrische Strom (I) durch eine mit der Schweißdrahtelektrode (4) verbundene Schweißstromquelle (5) eines Schweißsystems (1) zur Einstellung des an der Werkstückoberfläche (2A) des metallischen Werkstückes (2) hervorgerufenen Materialabtrages und/oder Materialveränderung geregelt wird.

6. Verfahren nach einem der vorangehenden Ansprüche 1 bis 5, wobei ein Bewegungsprofil und/oder eine Bewegungsfrequenz des sich zu der zu markierenden Werkstückoberfläche (2A) hin- und wegbeweglichen Drahtendes (4A) der Schweißdrahtelektrode (4) eingestellt wird.

7. Verfahren nach einem der vorangehenden Ansprüche 1 bis 6, wobei eine Bewegungsgeschwindigkeit und/oder Bewegungsbahn des Schweißbrenners (3), mit welcher das Drahtende (4A) der Schweißdrahtelektrode (4) entlang der zu markierenden Werkstückoberfläche (2A) des metallischen Werkstückes (2) geführt wird, eingestellt wird.

8. Verfahren nach Anspruch 1 bis 7,
wobei die an der Werkstückoberfläche (2A) des metallischen Werkstückes (2) generierten Markierungspunkte (6) und/oder Markierungsbahnen zur Darstellung von Daten, insbesondere zur Beschriftung des Werkstückes (2) und/oder des Werkstückes (2) mit einem Code, insbesondere QR-Code, verwendet werden.

9. Verfahren nach einem der vorangehenden Ansprüche 1 bis 8, wobei das sich hin und wegbewegende Drahtende (4A) der Schweißdrahtelektrode (4) während des Markierens entlang eines programmierten Sollverlaufs einer in einem nachfolgenden Schweißvorgang herzustellenden Schweißnaht geführt wird.

10. Verfahren nach Anspruch 9,
wobei eine Abweichung zwischen dem Istverlauf einer Markierungsbahn und dem Sollverlauf der Schweißnaht zur Qualitätskontrolle und/oder Nachjustierung einer Schweißbrennerführung gemessen wird.

11. Verfahren nach einem der vorangehenden Ansprüche 1 bis 10,
wobei eine Kontraststärke einer an der Werkstückoberfläche (2A) erzeugten Markierungsbahn durch Veränderung von Markierungsparametern eingestellt wird, welche die durch eine Schweißstromquelle (5) geregelte Spannungs- und/oder Stromstärke, das Bewegungsprofil und/oder die Bewegungsfrequenz der Schweißdrahtelektrode (4) und/oder die Bewegungsgeschwindigkeit des Schweißbrenners (3), mit welcher das Drahtende (4A) der Schweißdrahtelektrode (4) entlang der Werkstückoberfläche (2A) geführt wird, aufweisen.

12. Verfahren nach Anspruch 11,
wobei die beim Markieren der Werkstückoberfläche (2A) verwendeten Markierungsparameter als Datensatz in einem Datenspeicher (9) des Schweißsystems (1) abgespeichert und für einen nachfolgenden Markierungsvorgang wieder aus dem Datenspeicher (9) des Schweißsystems (1) ausgelesen werden.

13. Verfahren nach Anspruch 12,
wobei für verschiedene Kontraststärken einer an der Werkstückoberfläche (2A) gebildeten Markierungsbahn und/oder für unterschiedliche Materialien des metallischen Werkstückes (2) und/oder für unterschiedliche Schweißdrahtelektroden (4) ein zugehöriger Datensatz von geeigneten Markierungsparametern aus dem Datenspeicher (9) des Schweißsystems (1) zum Markieren der Werkstückoberfläche (2A) des metallischen Werkstückes (2) ausgelesen wird.

14. Verfahren nach einem der vorangehenden Ansprüche 1 bis 13,
wobei während des Markierens der Werkstückoberfläche (2A) des metallischen Werkstückes (2) die Werkstückoberfläche (2A) durch zugeführtes Schutzgas vor Oxidation geschützt wird.

15. Verfahren nach einem der vorangehenden Ansprüche 1 bis 14,
wobei der Schweißbrenner (3) während des Markierens der Werkstückoberfläche (2A) durch einen Roboterarm entsprechend einem programmierten Sollverlauf einer in einem nachfolgenden Schweißvorgang herzustellenden Schweißnaht automatisch geführt wird.

16. Verfahren nach einem der vorangehenden Ansprüche 1 bis 14,
wobei der Schweißbrenner (3) während des Markierens der Werkstückoberfläche (2A), insbesondere zur Beschriftung der Werkstückoberfläche (2A), handgeführt wird.

17. Markierungsvorrichtung zur Markierung einer Werkstückoberfläche (2A) eines metallischen Werkstückes (2), wobei ein Schweißbrenner (3) mit einer abschmelzbaren Schweißdrahtelektrode (4) eines Schweißsystems (1) entlang der zu markierenden Werkstückoberfläche (2A) des metallischen Werkstückes (2) führbar ist und dabei die Markierungsvorrichtung geeignet ist, ein Drahtende (4A) der abschmelzbaren Schweißdrahtelektrode (4) bezüglich der zu markierenden Werkstückoberfläche (2A) zur Erzeugung elektrischer Funken hin- und wegzubewegen, die einen Materialabtrag an der Werkstückoberfläche (2A) des metallischen Werkstückes (2) zur Markierung der Werkstückoberfläche (2A) hervorrufen.

18. Markierungsvorrichtung nach Anspruch 17,
wobei die Schweißdrahtelektrode (4) an eine Schweißstromquelle (5) des Schweißsystems (1) angeschlossen ist, die eine an der Schweißdrahtelektrode (4) anliegende elektrische Spannung (U) und/oder einen durch die Schweißdrahtelektrode (4) fließenden elektrischen Strom (I) zur Einstellung des an der Werkstückoberfläche (2A) des metallischen Werkstückes (2) hervorgerufenen Materialabtrages regelt.

19. Markierungsvorrichtung nach Anspruch 17 oder 18,
wobei das Drahtende (4A) der Schweißdrahtelektrode (4) aus einem geführten Schweißbrenner (3) des Schweißsystems (1) herausragt und während des Markierens der Werkstückoberfläche (2A) bezüglich der zu markierenden Werkstückoberfläche (2A) mit einem einstellbaren Bewegungsprofil und/oder einer einstellbaren Bewegungsfrequenz hin- und wegbewegbar ist.

20. Verwendung der Markierungsvorrichtung nach einem der vorangehenden Ansprüche 17 bis 19,
zur Simulation eines nachfolgenden Schweißprozesses mit visuellem und/oder akustischem Signal.

21. Schweißsystem (1) mit einer Markierungsvorrichtung nach einem der vorangehenden Ansprüche 17 bis 19.
